# EUROPÄISCHE PATENTANMELDUNG

(11) **EP 2 159 384 A1**
(43) Veröffentlichungstag der Anmeldung: **03.03.2010**
(21) Anmeldenummer: 08015130.1
(22) Anmeldetag: 27.08.2008
(51) Int. Cl.: F01D 25/24, F01D 25/12

(54) **Leitschaufelträger für eine Gasturbine**

(71) Anmelder: Siemens Aktiengesellschaft, 80333 München (DE)
(72) Erfinder: Benkler, Francois, Dr., 40880 Ratingen (DE); Böttcher, Andreas, Dr., 40880 Ratingen (DE); Grundei, Daniel, 46049 Oberhausen (DE); Lohse, Uwe, 42899 Remscheid (DE); Maldfeld, Ekkehard, Dr., 45479 Mühlheim an der Ruhr (DE); Milazar, Mirko, 46049 Oberhausen (DE); Schneider, Oliver, Dr., 46487 Wesel (DE); Sheng, Shilun, Dr., 46149 Oberhausen (DE)

(57) **Zusammenfassung**

Die Erfindung betrifft einen Leitschaufelträger (10) für den Verdichter oder Turbine einer axial durchströmten Gasturbine umfassend eine rohrförmige Wand (20), mit einem einströmseitigen Ende (16) sowie einem ausströmseitigen Ende (18) für ein im Innenraum (40) des Leitschaufelträgers (10) in einem Strömungspfad der Gasturbine strömendes Fluid, wobei in der Wand (20) zumindest ein Kühlkanal (26) für ein Kühlmittel vorgesehen ist, welcher sich jeweils von einem Kühlmittel-Einlass (32) zu einem Kühlmittel-Auslass (36) erstreckt. Um einen besonders einfach herstellbaren gekühlten Leitschaufelträger (10) für besonders hohe Einsatztemperaturen auszugestalten, wird vorgeschlagen, dass in einer äußeren Oberfläche (22) der Wand (20) für jeden Kühlkanal (26) eine Nut vorgesehen ist, welche zur Bildung des betreffenden Kühlkanals (26) durch eine Abdeckung (30) verschlossen ist. Insofern kann selbst bei vorhanden sein von mantelseitig angeordneten Verteilerräumen (24) eine Kühlmittelführung in Axialrichtung zur Vergleichmäßigung der Materialtemperaturen und thermischen Spannungen im Leitschaufelträger (10) erreicht werden.

## Beschreibung

Die Erfindung betrifft einen Leitschaufelträger für eine Gasturbine, umfassend eine rohrförmige Wand mit einem einströmseitigen Ende und einem dem einströmseitigen Ende gegenüberliegenden ausströmseitigen Ende für ein im Innenraum des Leitschaufelträgers strömendes Fluid.

Ein Leitschaufelträger der eingangs genannten Art für eine stationäre Gasturbine ist heutzutage prinzipiell aus zwei identischen halbrohrartigen Trägerelementen gebildet, welche flanschartig miteinander verschraubt prinzipiell eine Rohrform bilden. An deren inneren Oberflächen sind entlang des Umfangs verlaufende Nuten zur Aufnahme und Befestigung von Leitschaufeln der Turbineneinheit oder des Verdichters der Gasturbine vorgesehen.

Die Turbineneinheit der Gasturbine weist zudem einen entlang der Axialerstreckung sich im Querschnitt vergrößernden Strömungspfad auf, wobei auch dessen Außendurchmesser sich dabei stetig vergrößert. In den Strömungspfad ragen die Schaufelblätter der Turbinenleitschaufeln hinein, welche an dem Leitschaufelträger der Turbine innen befestigt sind. Aufgrund des sich in Axialrichtung vergrößernden Durchmessers des Strömungspfades ist auch der Turbinenleitschaufelträger einer solchen Gasturbine korrespondierend ausgebildet: mit einem in Strömungsrichtung sich im Mittel stetig vergrößernden Durchmesser. Es ist somit konisch ausgebildet. Bezogen auf das den Strömungspfad des Turbinenabschnitts durchströmende Heißgas weist ein Leitschaufelträger der eingangs genannten Art stets ein einströmseitiges Ende und ein ausströmseitiges Ende für das Heißgas auf. Das einströmseitige Ende des im Querschnitt ringförmigen Turbinenleitschaufelträgers weist dabei einen kleineren Radius auf als der Radius des ausströmseitigen Endes.

Am einströmseitigen Ende des Turbinenleitschaufelträgers wird das in der Brennkammer erzeugte Heißgas in den ringförmigen Strömungspfad der Gasturbine geführt, welcher sich entlang der Axialrichtung durch den Innenraum des Turbinenleitschaufelträgers erstreckt. Der Strömungspfad führt das eingespeiste Heißgas zum ausströmseitigen Ende des Turbinenleitschaufelträgers. Währenddessen entspannt sich das Heißgas im Strömungspfad arbeitsleistend an den Turbinenlaufschaufeln und gibt seine Wärme an die Umgebung ab. Zudem wird die Temperatur des Heißgases durch die Zuführung von Kühlluft weiter verringert. Bekanntermaßen ergeben sich für das Heißgas so höhere Eintrittstemperaturen als Austrittstemperaturen.

Dies führt zu Materialtemperaturen im Turbinenleitschaufelträger, die am einströmseitigen Ende wesentlich höher sind als an dessen ausströmseitigen Ende, so dass sich in Axialrichtung des Turbinenleitschaufelträgers ein Temperaturgefälle einstellt, was zu unterschiedlichen thermischen Belastungen und unterschiedlichen Wärmedehnungen führt.

Durch allgemeine Bestrebungen zu weiter gesteigerten Turbineneintrittstemperaturen werden jedoch die Gehäusebauteile der Gasturbine und speziell der Turbinenleitschaufelträger thermisch und mechanisch weiter belastet. Auch das Temperaturgefälle wird dadurch vergrößert. Um eine ausreichende Lebensdauer des Turbinenleitschaufelträgers für eine Gasturbine mit weiter erhöhten Eintrittstemperaturen zu gewährleisten, kann es erforderlich sein, den Werkstoff, aus dem der Turbinenleitschaufelträger gefertigt ist, zu wechseln, da das Material den höheren Temperaturen dauerhaft standhalten muss. Üblicherweise sind temperaturfestere Werkstoffe jedoch wesentlich teurer als weniger wärmebeständigere konventionelle Werkstoffe.

Gleiches gilt für in der Regel zylindrische Verdichterleitschaufelträger, die bei zunehmenden Verdichterdruckverhältnissen von zunehmend wärmerer Luft durchströmt werden. Hier sind jedoch die Strömungsrichtung und das Temperaturgefälle bekanntermaßen entgegengesetzt orientiert zum Turbinenleitschaufelträger.

Des Weiteren ist aus Flugzeug-Gasturbinen bekannt den Turbinenleitschaufelträger zu kühlen, indem an dessen Außenfläche in Axialrichtung Kühlluft entlang geführt wird. Diese Maßnahme ist aber für stationäre Gasturbinen mit einer Teilungsfuge jedoch nicht anwendbar, da entlang deren Axialerstreckung mehrere, gegeneinander abgedichtete Kühlluft-Verteilerräume vorgesehen sind, wobei der Turbinenleitschaufelträger abschnittsweise die radial innere Begrenzungswand des jeweiligen Kühlluft-Verteilerraums bildet.

Aufgabe der Erfindung ist daher die Bereitstellung eines Leitschaufelträgers für eine Gasturbine, welcher besonders einfach kühlbar ist, um bei weiter erhöhten Temperaturbedingungen weiterhin aus einem vergleichweise preiswerten Material gefertigt werden zu können.

Die der Erfindung zugrundeliegende Aufgabe wird durch einen Leitschaufelträger gemäß den Merkmalen des Anspruchs 1 gelöst.

Der Erfindung liegt die Erkenntnis zugrunde, dass in einer äußeren Oberfläche der Wand des Leitschaufelträgers für jeden Kühlkanal eine Nut vorzusehen ist, welche zur Bildung des betreffenden Kühlkanals durch eine Abdeckung größtenteils verschlossen ist. Sofern an der Abdeckung nicht auch der Einlass und/oder ein separater Auslass für das Kühlmittel vorgesehen sind, kann durch die Abdeckung der gesamte Kühlkanal verschlossen sein. Durch die Einbettung des Kühlkanals in das Innere der Leitschaufelträgerwand und durch die Verwendung der Abdeckung bleibt die Funktion des Leitschaufelträgers zur radialen Begrenzung der Kühlmittel-Verteilerräume entlang der axialen Erstreckung uneingeschränkt erhalten, so dass selbst bei stationären Gasturbinen nun Kühlmittel entlang der gesamten Axialerstreckung des Leitschaufelträgers geführt werden kann, um diesen zu kühlen.

Die Nuten können beim Abguss in die Außenkontur des gegossenen Leitschaufelträgers mit eingeformt werden, was kostengünstig ist und deren Herstellung vereinfacht.

Die Kanäle sind im Wesentlichen durch Abdeckungen verschlossen, abgesehen von den Einlässen und/oder den Auslässen. Die Abdeckungen werden an den Leitschaufelträger gasdicht geschweißt oder angelötet, um Leckagen an Kühlmittel zu vermeiden. Vorzugsweise ist die Abdeckung als Deckblech ausgebildet. Soweit erforderlich, können diese blechartigen Abdeckungen einen Versorgungs- und/oder Entsorgungsanschluss tragen, welche dann den Einlass bzw. den Auslass für das Kühlmittel in den Kühlkanal bilden.

Durch die Kühlung des Leitschaufelträgers, insbesondere durch die Kühlung der kritischen Stellen für die thermische Dehnung und auch für die Druckbelastung, also am heißeren Teil des Leitschaufelträgers, können die thermischen und mechanischen Belastungen verringert werden, wodurch dieser aus einem vergleichsweise preiswerten Material mit geringerer Wärmefestigkeit weiterhin gefertigt werden kann.

Vorteilhafte Ausgestaltungen sind in den Unteransprüchen angegeben.

Gemäß einer weiteren vorteilhaften Ausgestaltung ist vorgesehen, dass der Einlass und der Auslass jeweils am kühleren Ende des Leitschaufelträgers angeordnet sind und der den Einlass mit dem Auslass verbindende Kühlkanal sich bis zum heißeren Ende des Leitschaufelträgers erstreckt und dort einen Umlenkbereich aufweist, von wo aus er sich weiter zum am kühleren Ende angeordneten Auslass erstreckt. Bezogen auf einen Turbinenleitschaufelträger kann dasjenige Kühlmittel, welches üblicherweise zur Kühlung der im hinteren (ausströmseitigen) Teil des Turbinenleitschaufelträgers angeordneten Leitschaufeln verwendet wird, auch zur Kühlung des wärmsten Bereichs des Turbinenleitschaufelträger - nämlich des einströmseitigen Endes - genutzt werden. Für einen Verdichterleitschaufelträger könnte dagegen die Zuführung und Abführung des Kühlmittels an dessen einströmseitigen Ende erfolgen und der Umlenkbereich im hinteren, ausströmseitigen Ende vorgesehen sein. Die Begriffe "einströmseitig" und "ausströmseitig" beziehen sich im Rahmen dieser Anmeldung auf das im Inneren des betreffenden Leitschaufelträger strömende Fluid; bei einem Verdichterleitschaufelträger also auf die verdichtete Luft und bei einem Turbinenleitschaufelträger auf das Heißgas.

Durch die Kühlung des Leitschaufelträgers am heißeren Ende kann dort die thermische Belastung verringert werden. Zudem wird durch den Abtransport der Wärmeenergie mit Hilfe des Kühlmittels zum kühleren Ende des Leitschaufelträgers dieses Ende zumindest geringfügig beheizt. Dies erhöht zwar die bisher geringere thermische Belastung am ausstromseitigen Ende, jedoch bleibt diese weiterhin insgesamt innerhalb der zulässigen thermischen Belastung. Insbesondere hierdurch ergibt sich eine Vergleichmäßigung der Temperaturbelastung im Leitschaufelträger entlang seiner axialen Erstreckung. Sein Temperaturgefälle kann dadurch verringert werden.

Ein weiterer Vorteil der voranbeschriebenen aktiven Temperierung kann auch im transienten An- und Abfahrbetrieb auftreten, nämlich dann, wenn auf die Systemdynamik der Gasturbine mittels einer gesteuerten Kühlung derart eingewirkt wird, dass eine Spaltoptimierung während dieser Betriebsphase erreicht wird. Gleichzeitig kann das transiente Verhalten der Gasturbine durch ein schnelleres und gleichmäßigeres Aufwärmen und Abkühlen des Leitschaufelträgers verbessert werden.

Für bestehende Gasturbinen ist allein die Konstruktion des Leitschaufelträgers zu ändern, um diesen für höhere Temperaturen auszugestalten.

Gemäß einer weiteren vorteilhaften Ausgestaltung ist entlang des Umfangs der Wand verteilt eine Vielzahl von erfindungsgemäßen Kühlkanälen vorgesehen. Zweckmäßigerweise sind deren Einlässe an einer äußeren Oberfläche der Wand angeordnet, wobei üblicherweise die Zuführung von Kühlmittel durch den Leitschaufelträger von Außen erfolgt, so dass die Anordnung des Kühlluft-Einlasses an der äußeren Oberfläche der im Querschnitt rohrförmigen Wand des Leitschaufelträgers zweckmäßig ist.

Bei in die Mantelfläche des Leitschaufelträgers bündig versenkten Abdeckblechen kann eine im Querschnitt kreisbogenförmige Außenfläche erhalten werden, welche das Drehen des Leitschaufelträgers innerhalb der unteren Gehäusehälfte bei eingelegtem Rotor ermöglicht. Der Leitschaufelträger wird dabei von Wälzlagern getragen, die ihrerseits sich am Gehäuse abstützen und somit zwischen Leitschaufelträger und unterer Gehäusehälfte entlang des Umfangs verteilt sind.

Im Fall von Turbinenleitschaufelträgern wird Kühlmittel in der Regel zur Kühlung von innerhalb des Turbinenleitschaufelträgers angeordneten Turbinenleitschaufeln und/oder zur Sperrung von dort vorhandenen Spalten verwendet. Dann ist es von Vorteil, wenn die Auslässe an einer inneren Oberfläche der Wand als Bohrung angeordnet sind. Insbesondere hierdurch ist eine einfache Ableitung des Kühlmittels zum weiteren Verwendungsort möglich.

Eine besonders effiziente Wärmeübertragung kann erreicht werden, wenn an zumindest einer Kühlkanalwand Turbulatoren angeordnet sind, welche die im Kühlkanal strömende Kühlluft weiter durchmischt.

Die Erfindung kann insbesondere bei Leitschaufelträgern verwendet werden, welche aus zwei halbrohrartigen Leitschaufelträgerelementen gebildet sind, die ihrerseits flanschartig miteinander verschraubt sind. Diese Aufteilung in zwei identische Leitschaufelträgerelemente ist insbesondere für stationäre Gasturbinen von Vorteil, welche in der Regel eine Teilungsebene aufweisen, die parallel zur Horizontalebene verläuft.

Gemäß einer weiteren vorteilhaften Ausgestaltung der Erfindung ist die innere Oberfläche des Leitschaufelträgers derart ausgebildet, dass daran in einem Kranz angeordnete Leitschaufeln der Gasturbine befestigbar sind. Zweckmäßigerweise erstrecken sich an der inneren Oberfläche in Umfangsrichtung Nuten, in die Leitschaufeln eingehakt bzw. eingeschoben werden können.

Die Erfindung wird anhand einer Zeichnung erläutert, wobei sich weitere Merkmale und weitere Vorteile aus der Beschreibung ergeben. Es zeigen:
- FIG 1: eine stationäre Gasturbine in einem Längsschnitt,
- FIG 2: eine perspektivische schematische Ansicht eines erfindungsgemäßen Leitschaufelträgers für eine stati- onäre Gasturbine,
- FIG 3: den Längsschnitt durch den erfindungsgemäßen Leit- schaufelträger gemäß FIG 2 entlang der Schnittlinie III-III und
- FIG 4: einen Längsschnitt durch den erfindungsgemäßen Leit- schaufelträger gemäß FIG 2 entlang der Schnittlinie IV-IV.

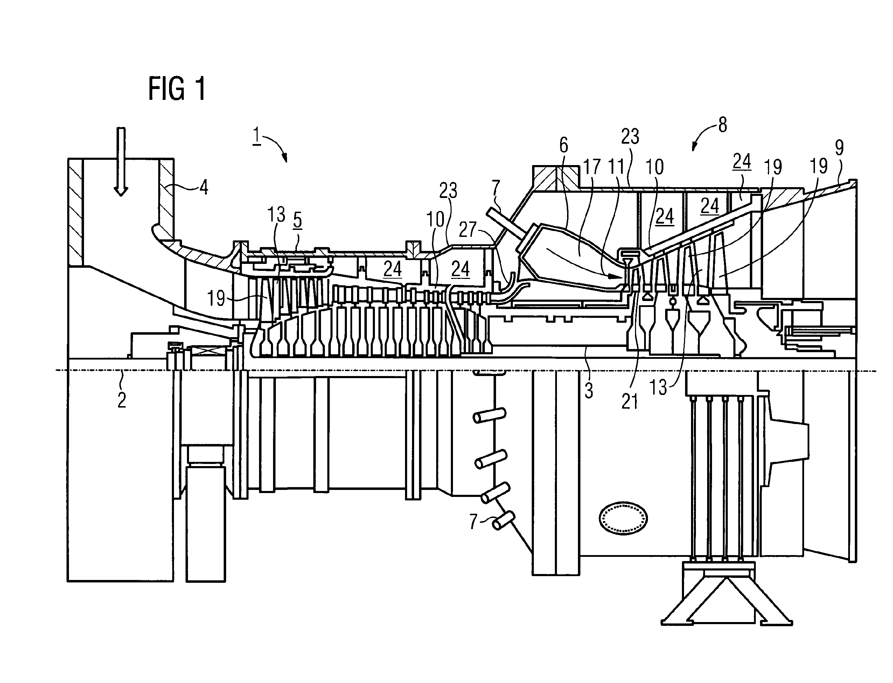

FIG 1 zeigt eine Gasturbine 1 in einem Längsteilschnitt. Sie weist im Inneren einen um eine Rotationsachse 2 drehgelagerten Rotor 3 auf, der auch als Turbinenläufer bezeichnet wird. Entlang des Rotors 3 folgen aufeinander ein Ansauggehäuse 4, ein Verdichter 5, eine torusartige Ringbrennkammer 6 mit mehreren gleichmäßig verteilten Brennern 7, eine Turbineneinheit 8 und ein Abgasgehäuse 9. Die Ringbrennkammer 6 bildet einen Verbrennungsraum 17, der mit einem ringförmigen Strömungspfad 21 kommuniziert.

In der Turbineneinheit 8 sind vier hintereinander geschaltete Turbinenstufen vorgesehen. Jede Stufe ist aus zwei Schaufelreihen gebildet. In Strömungsrichtung eines in der Ringbrennkammer 6 erzeugten Heißgases 11 gesehen, folgt im Strömungspfad 21 jeweils einer Leitschaufelreihe eine aus Laufschaufeln 19 gebildete Reihe. Die Leitschaufeln 13 sind am Leitschaufelträger 10 befestigt, wohingegen die Laufschaufeln 19 einer Reihe jeweils mittels einer Turbinenscheibe am Rotor 3 angebracht sind. An dem Rotor 3 ist ein Generator oder eine Arbeitsmaschine (nicht dargestellt) angekoppelt.

Im Verdichter 5 sind ebenfalls mehrere Schaufelstufen angeordnet, die jeweils von aufeinanderfolgenden Reihen von Laufschaufeln 19 und Leitschaufeln 13 gebildet werden. Dabei sind beispielsweise die hinteren Leitschaufeln mit ihren vergleichsweise kurzen Schaufelblättern ebenfalls an einem Leitschaufelträger 10 in Umfangsnuten eingeschoben.

Zwischen einem Außengehäuse 23 der Turbineneinheit 8 und auch des Verdichters 5 und den Leitschaufelträgern 10 sind in Axialrichtung aufeinander folgend mehrere Sammel- bzw. Verteilerräume 24 vorgesehen. Im Bereich der Turbineneinheit 8 wird von diesen Verteilerräumen aus Kühlmittel mit unterschiedlichen Temperaturen und Drücken zu den Leitschaufel 13 und Führungsringen unterschiedlicher Turbinenstufen geführt wird. Im Bereich des Verdichters 5 wird in diesen Sammelräumen die dem Verdichter entnommene Kühlluft gesammelt.

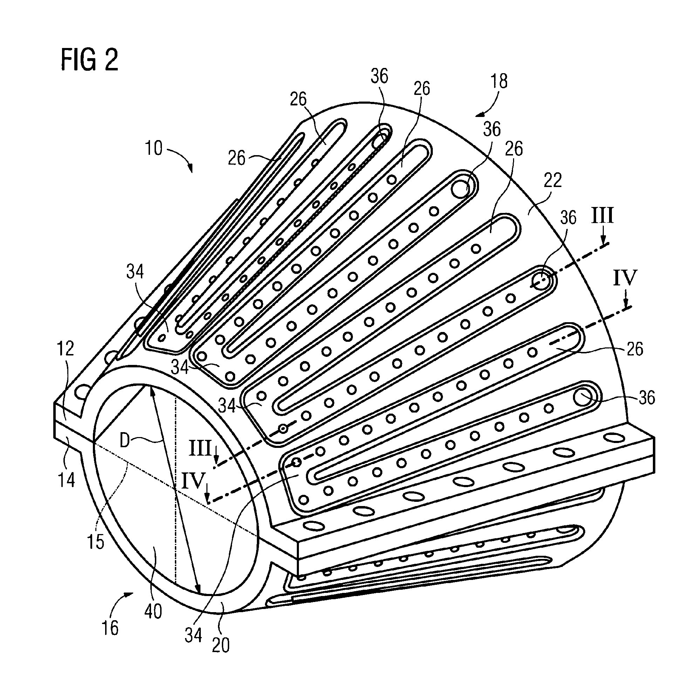

FIG 2 zeigt in perspektivischer schematischer Darstellung einen Leitschaufelträger 10 für die stationäre, axial durchströmte Gasturbine, welcher aufgrund der konischen Ausgestaltung insbesondere in der Turbineneinheit 8 verwendet sein kann. Ein im Verdichter verwendeter Leitschaufelträger ist dagegen eher zylindrisch ausgebildet oder nur geringfügig konisch. Insgesamt gilt für das nachfolgend für einen Turbinenleitschaufelträger Gesagte auch für einen Verdichterleitschaufelträger, unabhängig von der Längsschnittkontur.

Für die Erfindung nicht relevante Merkmale des Turbinenleitschaufelträgers 10 sind in den weiteren Figuren nicht dargestellt. Der Turbinenleitschaufelträger 10 ist aus zwei halbrohrartigen Leitschaufelträgerelementen 12, 14 gebildet, wobei das Leitschaufelträgerelement 12 die obere Hälfte des Turbinenleitschaufelträgers 10 bildet und das Leitschaufelträgerelement 14 dessen untere Hälfte.

Die Leitschaufelträgerelemente 12, 14 liegen in einer Teilungsebene 15 flanschartig aneinander.

Der Turbinenleitschaufelträger 10 weist eine axiale Erstreckung auf, wobei er entlang dieser Erstreckung konisch ausgebildet ist. Demgemäß weist der rohrartige Turbinenleitschaufelträger 10 ein erstes Ende 16 sowie ein dem ersten Ende 16 gegenüberliegendes zweites Ende 18 auf. Bei dem hier dargestellten Turbinenleitschaufelträger 10 ist der innere Durchmesser D des ersten Endes 16 wesentlich kleiner als der innere Durchmesser des zweiten Endes 18. Gleiches gilt für die äußeren Durchmesser. Bei einem Verdichterleitschaufelträger können die einströmseitigen und die ausströmseitigen Durchmesser ungefähr gleich groß sein.

Verwendet in einer stationären Gasturbine ist der Turbinenleitschaufelträger 10 derartig in einem Druckmantel der Gasturbine angeordnet, dass das erste Ende 16 dem Auslass einer nicht weiter dargestellten Brennkammer gegenüberliegt. Das zweite Ende 18 des Turbinenleitschaufelträgers 10 liegt dann einem nicht dargestellten Ausgangsdiffusor der Gasturbine gegenüber.

In einem vom Turbinenleitschaufelträger 10 umfassten Innenraum 40 erstreckt sich in Axialrichtung ein Strömungspfad, welcher radial außen sowie radial innen von geeigneten Elementen, d.h. Plattformen von Turbinenschaufeln und Führungsringen begrenzt wird. Der Klarheit halber sind diese Elemente in FIG 2 nicht dargestellt, ebenso wenig wie der innerhalb des Turbinenleitschaufelträgers 10 im Querschnitt ringförmig ausgestaltete Strömungspfad für das in der Brennkammer erzeugte Heißgas. Bezogen auf das Heißgas und dessen Strömungsrichtung ist das erste Ende 16 des Turbinenleitschaufelträgers 10 dessen einströmseitiges Ende 16 und das zweite Ende 18 dessen ausströmseitiges Ende 18.

Der Turbinenleitschaufelträger 10 wird prinzipiell von einer rohrförmigen Wand 20 gebildet. An deren äußerer Oberfläche 22, d.h. an der äußeren Mantelfläche der beiden halbrohrförmigen Leitschaufelträgerelemente 12, 14, sind mehrere Kühlkanäle 26 angeordnet, welche entlang des Umfangs verteilt sind. Die Darstellung gemäß FIG 2 zeigt die in der Wand 20 angeordneten Kühlkanäle 26, ohne die ansonsten oberhalb der Kühlkanäle 26 angeordneten Abdeckungen, die bündig in der Mantelfläche versenkt sind. Jeder der Kühlkanäle 26 weist insgesamt eine U-förmige Erstreckung auf: ein erster Abschnitt des Kühlkanals 26 erstreckt sich vom zweiten Ende 18 hin zum ersten Ende 16 des Turbinenleitschaufelträgers 10. Dort geht der erste Abschnitt in einen Umlenkbereich 34 über. An den Umlenkbereich schließt sich ein zweiter Abschnitt des Kühlkanals 26 an, der sich bis zum zweiten Ende 18 des Turbinenleitschaufelträgers 10 zurück erstreckt.

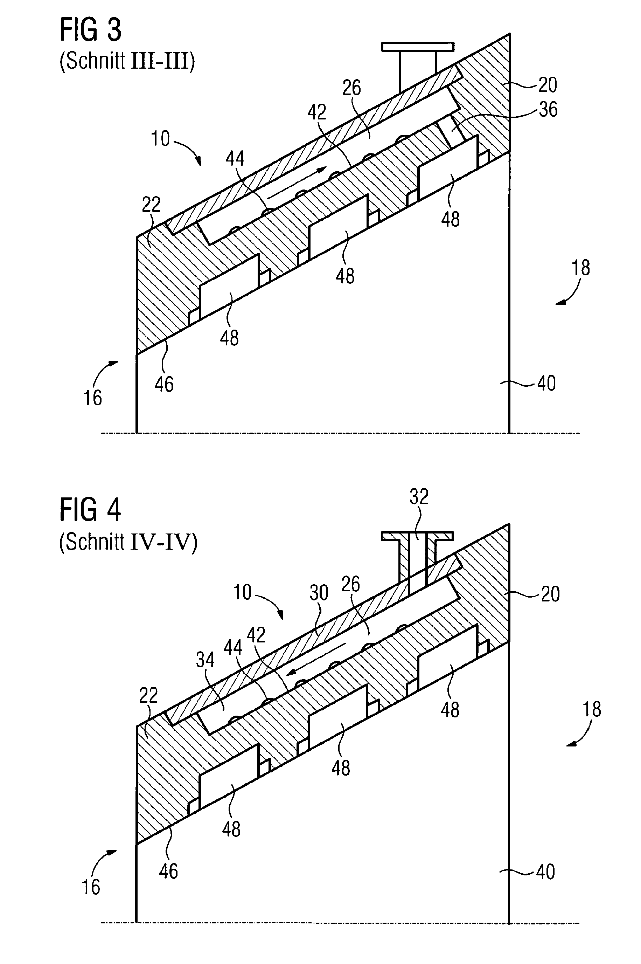

FIG 4 zeigt den Schnitt III-III durch den Turbinenleitschaufelträger 10 aus FIG 2. Die in FIG 2 nicht dargestellte Abdeckung 30 ist in FIG 3 und FIG 4 gezeigt. Mittels der Abdeckung 30 ist der ansonsten nach Außen hin offene Kühlkanal 26 größtenteils verschlossen, abgesehen von einem Einlass 32, durch den dem Kühlkanal 26 ein Kühlmittel, vorzugsweise Kühlluft, zugeführt werden kann. Der Einlass 32 ist am zweiten Ende 18 des Turbinenleitschaufelträgers 10 angeordnet. Der Einlass 36 kann aber auch - bezogen auf das Fluid - weiter stromauf angeordnet sein.

Das durch den Einlass 32 zugeführte Kühlmittel strömt entlang des Kühlkanals 26 zum ersten Ende 16 hin, wo es dann, insbesondere nahe des Umlenkbereichs 34, den Turbinenleitschaufelträger 10 kühlt. Nachdem es den Umlenkbereich 34 durchströmt hat, strömt es in dem nachfolgenden Kühlkanalabschnitt. Der sich an den Umlenkbereich 34 anschließende Abschnitt des Kühlkanals 26 ist dabei in FIG 3 dargestellt. Am zweiten Ende 18 ist ein Auslass 36 angeordnet, durch den das Kühlmittel aus dem Kühlkanal 26 nach innen abgeführt werden kann. Zuvor wärmt jedoch das aufgeheizte Kühlmittel den hinteren Bereich des Turbinenleitschaufelträgers 10 auf, wodurch eine Angleichung der Temperatur entlang der Axialrichtung erfolgt. Der Auslass 36 führt das Kühlmittel in den vom Turbinenleitschaufelträger 10 umgriffenen Innenraum 40, von wo aus es zur weiteren Kühlung von im hinteren Bereich des Turbinenleitschaufelträgers 10 befestigten Turbinenleitschaufeln eingesetzt werden kann. Anstelle dessen oder zusätzlich kann das Kühlmittel auch zur Sperrung von dort vorhandenen Spalten verwendet werden. Selbstverständlich kann der Auslass 36 auch - bezogen auf das Fluid - weiter stromauf angeordnet sein.

Während des Betriebs einer Gasturbine mit einem erfindungsgemäß ausgestalteten Turbinenleitschaufelträger 10 kann die am ersten, bei einem Turbinenleitschaufelträger 10 heißeren Ende 16 des auftretende Wärmeenergie besondere effizient durch das in der Wand 20 strömende Kühlmittel abtransportiert werden, nachdem dieses durch den Einlass 32 dem Kühlkanal 26 zugeführt worden ist. Nach der Kühlung des ersten Endes 16 des Turbinenleitschaufelträgers 10 wird die Kühlluft über den im kühleren Abschnitt des Turbinenleitschaufelträgers angeordneten Auslass 36 in den Innenraum 40 geführt.

Insofern wird das Kühlmittel nicht wie bisher, auf kürzestem Weg radial von außen nach innen durch den Turbinenleitschaufelträger 10 geführt, sondern über eine Kühlschleife. Die mäanderförmige Kühlschleife führt das Kühlmittel aus dem kälteren Bereich des Turbinenleitschaufelträgers 10 - dessen stromabwärtiges Ende - zu einem wärmeren Bereich - dem ersten Ende 18 - und wieder zurück zum kühleren Bereich. Der hintere, ausströmseitige Bereich des Leitschaufelträgers wird erwärmt durch das bei der Kühlung des vorderen Bereichs des Leitschaufelträgers aufgeheizte Kühlmittel. In Axialrichtung gesehen kann somit eine Vergleichmäßigung der thermischen Belastung des Turbinenleitschaufelträgers 10 erreicht werden, wobei die thermische Spitzenbelastung insgesamt gesenkt wird. Dies ermöglicht die Verwendung eines vergleichsweise preiswerten Materials für den Turbinenleitschaufelträger 10 trotz einer weiteren Erhöhung der Umgebungstemperatur des Turbinenleitschaufelträgers 10 durch höhere Turbineneintrittstemperaturen.

Bei einem Verdichterleitschaufelträger wäre dagegen das einströmseitige Ende (für die verdichtete Luft) das zweite (kühlere) Ende und ausströmseitige Ende (für die verdichtete Luft) das erste (heißere) Ende.

Sofern es zweckmäßig oder erforderlich ist, kann die den Kühlkanal 26 radial innen begrenzende Wand 42 auch mit Turbulatoren 44 ausgestaltet sein, um den Wärmeübergang zu verbessern. Dies führt dann zu einer vergleichsweise effizienten Wärmeübertragung aus dem Turbinenleitschaufelträger 10 in das Kühlmittel und umgekehrt.

Zudem sind an der inneren Oberfläche 46 des Turbinenleitschaufelträgers 10 in Umfangsrichtung endlos verlaufenden Nuten 48 vorgesehen, in welchen Leitschaufeln unterschiedlicher Turbinenstufen eingeschoben und befestigt werden können. Diese Nuten 48 sind jedoch nur rein schematisch dargestellt.

Insgesamt betrifft die Erfindung einen Leitschaufelträger 10 für den Verdichter oder Turbine einer axial durchströmten Gasturbine umfassend eine rohrförmige Wand 20, mit einem einströmseitigen Ende 16 sowie einem ausströmseitigen Ende 18 für ein im Innenraum 40 des Leitschaufelträgers 10 in einem Strömungspfad der Gasturbine strömendes Fluid, wobei in der Wand 20 zumindest ein Kühlkanal 26 für ein Kühlmittel vorgesehen ist, welcher sich jeweils von einem Kühlmittel-Einlass 32 zu einem Kühlmittel-Auslass 36 erstreckt. Um einen besonders einfach herstellbaren gekühlten Leitschaufelträger 10 für besonders hohe Einsatztemperaturen auszugestalten, wird vorgeschlagen, dass in einer äußeren Oberfläche (22) der Wand (20) für jeden Kühlkanal (26) eine Nut vorgesehen ist, welche zur Bildung des betreffenden Kühlkanals (26) durch eine Abdeckung (30) verschlossen ist. Insofern kann selbst bei vorhanden sein von mantelseitig angeordneten Verteilerräumen 24 eine Kühlmittelführung in Axialrichtung zur Vergleichmäßigung der Materialtemperaturen und thermischen Spannungen im Leitschaufelträger 10 erreicht werden.

## Patentansprüche

1. Leitschaufelträger (10) für eine Gasturbine,
umfassend eine rohrförmige Wand (20),
mit einem einströmseitigen Ende (16) und einem dem einströmseitigen Ende (16) gegenüberliegenden ausströmseitigen Ende (18) für ein im Innenraum (40) des Leitschaufelträgers (10) in einem Strömungspfad der Gasturbine strömendes Fluid,
wobei in der Wand (20) zumindest ein Kühlkanal (26) für ein Kühlmittel vorgesehen ist, welcher sich jeweils von einem Kühlmittel-Einlass (32) zu einem Kühlmittel-Auslass (36) erstreckt,
**dadurch kennzeichnet, dass** in einer äußeren Oberfläche (22) der Wand (20) für jeden Kühlkanal (26) eine Nut vorgesehen ist, welche zur Bildung des betreffenden Kühlkanals (26) durch eine Abdeckung (30) verschlossen ist.

2. Leitschaufelträger (10) nach Anspruch 1,
bei dem der den Einlass (32) mit dem Auslass (36) verbindende Kühlkanal (26) sich in Axialrichtung vom Einlass (32) bis zu einem am kühleren Ende (16) des Leitschaufelträgers (10) angeordneten Umlenkbereich (34) und von dort aus weiter zum Auslass (36) erstreckt.

3. Leitschaufelträger (10) nach Anspruch 1 oder 2,
bei dem entlang des Umfangs der Wand (20) verteilt eine Vielzahl von Kühlkanälen (26) vorgesehen ist.

4. Leitschaufelträger (10) nach Anspruch 1, 2 oder 3,
bei dem zumindest einer der Einlässe (32) an einer äußeren Oberfläche (22) der Wand (20) oder in der Abdeckung (30) angeordnet ist.

5. Leitschaufelträger (10) nach einem der vorangehenden Ansprüche,
bei dem die Abdeckung (30) bündig in die Mantelfläche des Leitschaufelträgers (10) versenkt ist.

6. Leitschaufelträger (10) nach einem der vorangehenden Ansprüche,
bei dem zumindest einer der Auslässe (36) an einer inneren Oberfläche (46) der Wand (20) angeordnet ist.

7. Leitschaufelträger (10) nach einem der vorangehenden Ansprüche,
bei dem an zumindest einer Kühlkanalwand (42) Turbulatoren (44) angeordnet sind.

8. Leitschaufelträger (10) nach einem der vorangehenden Ansprüche,
welcher konisch ausgebildet und
aus zwei halbrohrartigen Leitschaufelträgerelementen (12), (14) gebildet ist,
welche flanschartig miteinander verbunden sind.

9. Leitschaufelträger (10) mit in seiner inneren Oberfläche (46) angeordneten endlosen Nuten (48) zur Befestigung von in einem Kranz angeordneten Leitschaufeln einer Turbine oder eines Verdichters.

10. Gasturbine mit einem Druckmantel,
in dem ein Leitschaufelträger (10) nach einem der Ansprüche 1 bis 9 angeordnet ist.
